Europäisches Patentamt

European Patent Office

Office européen des brevets

(19)

(11) Publication number: **0 120 973 B1**

## EUROPEAN PATENT SPECIFICATION
### published in accordance with Art. 158(3) EPC

(45) Date of publication of patent specification: 20.02.91

(51) Int. Cl.5: **G05B 19/407, B23B 47/02**

(21) Application number: **83903198.6**

(22) Date of filing: **06.10.83**

(86) International application number:
**PCT/JP83/00329**

(87) International publication number:
**WO 84/01633 (26.04.84 84/11)**

(54) **Numerically controlled machine tool.**

(30) Priority: **07.10.82 JP 176691/82**

(43) Date of publication of application:
**10.10.84 Bulletin 84/41**

(45) Publication of the grant of the patent:
**20.02.91 Bulletin 91/08**

(84) Designated Contracting States:
**DE FR GB**

(56) References cited:
**GB-A- 1 141 853**
**JP-A-49 116 481**
**JP-B- 4 615 366**
**JP-Y- 4 740 064**
**US-A- 3 845 532**

(73) Proprietor: **FANUC LTD.**
**3580, Shibokusa Aza-Komanba, Oshino-mura Minamitsuru-gun, Yamanashi 401-05(JP)**

(72) Inventor: **FUKUYAMA, Hiroomi**
**719-644, Yano-cho Hachioji-shi**
**Tokyo 192(JP)**

(74) Representative: **Billington, Lawrence Emlyn et al**
**HASELTINE LAKE & CO Hazlitt House 28 Southampton Buildings Chancery Lane London WC2A 1AT(GB)**

## Description

This invention relates to a numerically controlled machine tool and, more particularly, to such a machine tool having a spindle motor and a feed shaft for a movable element.

Machine tools having a spindle generally require a spindle motor for driving the spindle at a prescribed rotational speed, and a feed motor for transporting a tool or table along a commanded path, or for positioning the tool or table at a prescribed point. A typical system is shown in US-A-3 845 532.

Although there has recently developed a need for a low-cost machine tool, the conventional system, which has the spindle motor and feed motor as well as servo circuits for the respective motors, does not lend itself to a major reduction in cost. A problem which results is that a low-cost numerically controlled drilling machine or the like cannot be provided.

Accordingly, an object of the present invention is to provide a simplified numerically controlled machine tool.

According to the invention there is provided a numerically controlled machine tool having a spindle motor for rotating a spindle to provide a machining action on a work piece, a feed shaft for driving a movable element; means for monitoring the distance remaining to be travelled by the feed shaft, and feed velocity changeover means for changing the feed velocity of the feed shaft on the basis of said distance; characterised in that said driven movable element provides a feed of the spindle relative to said workpiece, and by the further provision of a mechanism for mechanically connecting the motive force of the said spindle motor to the feed shaft in order to drive the feed shaft by the rotation of the spindle motor.

In such a numerically controlled machine tool the spindle motor can thus be used both to rotate the spindle and to drive the feed shaft.

In some embodiments of the present invention a numerical control system is capable of raising and lowering the travelling speed of the feed shaft, and of stopping the movable element at a commanded position.

Brief Description of the Drawings

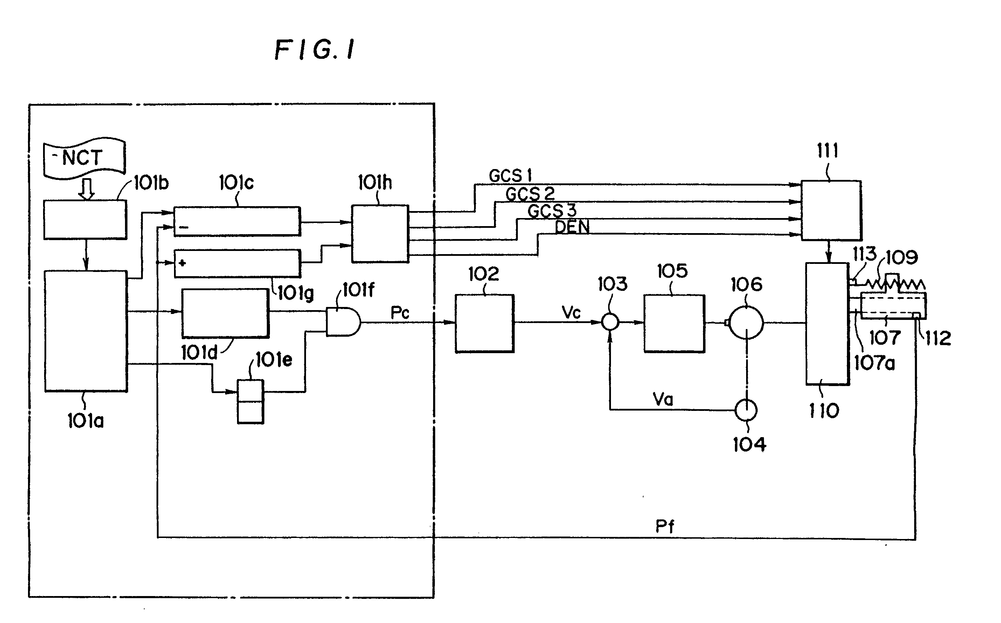

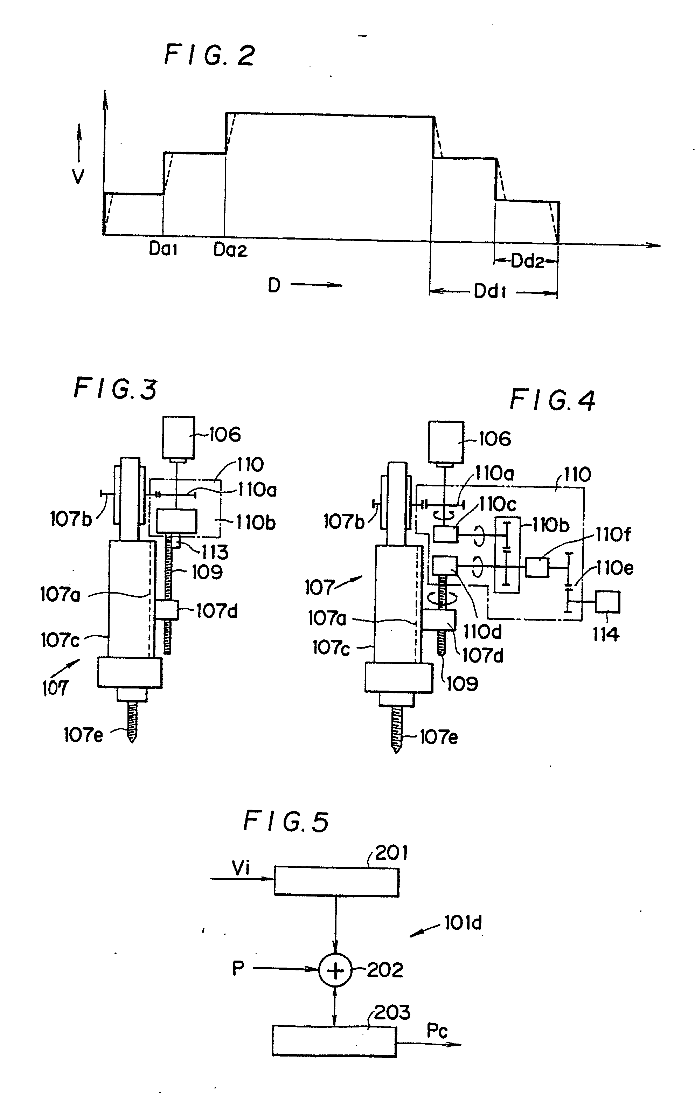

Fig.1 is a block diagram illustrating a numerical control system of an embodiment of the present invention; Fig.2 is a view for describing acceleration and deceleration controls; Fig.3 is view showing a mechanism of an embodiment of the present invention; Fig.4 is a view showing a mechanism of another embodiment of the present invention; and Fig.5 is a block diagram showing an embodiment of a pulse generator.

Embodiments of the present invention will now be described in detail with reference to the drawings.

In a drilling machine, machining is carried out by positioning a workpiece or a table carrying a printed circuit board or the like thereon in an X-Y plane, thereafter lowering a tool along the Z axis while a spindle the distal end whereof holds the tool is being rotated at a prescribed rotational speed, raising the tool after a hole has been drilled in the workpiece (printed circuit board), and subsequently repeating the positioning in the X-Y plane as well as the lowering and raising of the tool (while the tool is being rotated). In machining such as the drilling of holes in a printed circuit board carried out in this manner, it will suffice if the holes can be drilled, and positioning precision along the Z axis need not be as high as that found in lathe work or in work performed by a machining center. The present invention, taking into consideration the fact that high precision is not required along the Z axis, seeks to provide a low-cost numerical control system, such as a low-cost NC drilling machine, by using a Z-axis drive motor also as a spindle motor.

Fig. 1 is a block diagram of a numerical control system of a machine tool according to the present invention, and Fig. 2 is a view for describing acceleration and deceleration control.

A numerical control apparatus (NC apparatus) 101 includes a control unit 101a, a tape reader 101b, a register 101c which, when a Z-axis move command z □ □ ... □ is issued, is preset to the numerical value (amount of travel) □ □ ... □ which follows the letter of the alphabet Z, and which has its contents counted down one step at a time whenever a movable element such as a tool travels a prescribed distance along the z axis, a pulse generator 101d for generating a pulse train having a prescribed pulse rate, a flip-flop 101e set by a spindle forward rotation instruction, an AND gate 101f which opens when the flip-flop 101e is reset, a counter 101g for counting feed-back pulses Pf each of which is generated by a position sensor 112 whenever the movable element travels a prescribed distance, and a discriminating circuit 101h which discriminates the contents of the register 101c at deceleration and the contents of the counter 101g at acceleration to produce gear changeover signals GSC1, GSC2, GSC3 and a positioning end signal DEN. A command pulse Pc, which is the output of the AND gate 101f, is applied as an input to a frequency - voltage converter (F/V converter) 102j, the latter producing a velocity command voltage Vc as an output. A computing unit 103 computes the difference between the velocity command voltage Vc and an actual velocity voltage Va produced by a tachometer 104, and applies the result as an input to a velocity control circuit 105. The latter rotates and controls a spindle motor 106 in such fashion as to establish the relation Va = Vc. A spindle 107a having a cutter mounted in its distal end is coupled to the spindle motor 106 so as to rotate at all times when the spindle motor 106 is rotating, and a lead screw 109 for driving a movable element such as a spindle mechanism which rotatably supports the spindle 107a is connected to or disconnected from the spindle motor 106 when appropriate via a gear box (gear mechanism) 110. The position sensor 112 is constituted by a pulse coder or the like and generates a single feedback pulse Pf whenever the movable element 108 travels a prescribed distance.

Items of NC data read from an NC tape by the tape reader 101b are applied to the control unit 101a. If an item of NC data is an M-function instruction indicating spindle rotation, the control unit 101a sets the flip-flop 101e to rotate the spindle motor 106. If the data is an S-function instruction indicating spindle rotational speed, then the control unit 101a applies a velocity command value to the pulse generator 101d to change the output pulse rate thereof and, hence, control the rotational speed of the spindle motor. It should be noted that a well-known pulse rate multiplier or DDA (digital differential analyzer) can be utilized as the pulse generator. If the read NC data is path data along the Z-axis, the control unit 101a presets the register 101c to the numerical value following the letter of the alphabet "Z".

When the status of register 101c becomes non-zero (i.e., when movement along the X-axis is commanded), the discriminator 101h of the NC apparatus 101 first produces a first speed signal GCS1 and then monitors the status (initially zero) of the counter 101g, produces a second speed signal GCS2 when the table 108 travels a first prescribed distance $Da_1$, and produces a third speed signal GCS3 when the table travels a second distance $Da_2$ ($Da_2 > Da_1$). A gear changeover control unit 111, which controls the gear mechanism 110, changes the gear ratio between the spindle motor 106 and lead screw 109 on the basis of the first speed signal GCS1, second speed signal GCS2 and third speed signal GCS3, thereby to accelerate feed along the Z axis. At the end of acceleration, the discriminator 101h monitors the status of the register 101c and produces the second speed signal GCS2 when the distance remaining to be traveled becomes $Dd_1$, the first speed signal GCS2 when the distance remaining to be traveled becomes $Dd_2$ ($Dd_2 < Dd_1$), and the positioning end signal DEN when the distance remaining to be traveled becomes zero or a value close to zero. In response to the second speed signal GCS2 and first speed signal GCS1, the gear changeover control unit 111 changes the gear ratio of the gear mechanism 110 and, in response to the positioning end signal DEN, disconnects the spindle motor 106 and lead screw 109 and applies a brake 113 to stop the rotation of the lead screw.

Accordingly, when the Z-axis move instruction is issued, the spindle 107a, while rotating at the prescribed speed, is accelerated to a certain traveling speed, as shown in Fig. 2, during which time the spindle is lowered toward the workpiece. When the spindle approaches the commanded position, spindle travel is decelerated and stopped at the commanded position, while the spindle is still rotating at the prescribed speed. In the meantime, the prescribed hole is drilled in the workpiece by the tool mounted in the end of the spindle. In Fig. 2, traveling distance D is plotted along the horizontal axis, and feed velocity V along the vertical axis.

Fig. 3 is a view showing the peripheral equipment of the gear mechanism illustrated in Fig. 1. Portions similar to those shown in Fig. 1 are designated by like reference characters. The spindle mechanism 107 includes the rotatable spindle 107a, a gear 107b, a spindle sleeve 107c rotatably supporting the spindle 107a, a nut member 107d secured to the spindle sleeve 107c and formed to include female threads, and a tool 107e mounted in the spindle 107a. The gear mechanism 110 includes a gear 110a attached to the rotary shaft of the spindle motor 106, and a gear train 110b. The lead screw 109 is secured to the last gear of the gear train and is threadedly engaged with the female threads formed on the nut member 107d. The rotating motion of the spindle motor 106 is transmitted to the spindle 107a via the gears 110a, 107b to rotate the spindle 107a. The rotation of the spindle motor 107 causes the lead screw 109 to be rotated via the gear train 110b, with the spindle mechanism being moved up or down depending upon the direction in which the lead screw rotates. The gear train 110b is so arranged as to alter the gear ratio based on the first, second and third speed signals GCS1 through GCS3 produced by the discriminating circuit 101h of Fig. 1, and to disconnect the spindle motor 106 and lead screw 109 in response to the positioning end signal DEN.

Fig. 4 is a view showing the peripheral equipment of a gear mechanism in a case where a Z-axis quick-feed motor is provided. Portions similar to those shown in Fig. 3 are designated by like reference characters. In Fig. 4, cutting feed along the Z axis is performed by the spindle motor 106, and quick feed along the Z-axis is performed by a quick-feed motor 114. The gear mechanism 110 includes the gear 110a attached to the rotary shaft of the spindle motor 106, te gear train 110b, bevel gears 110c, 110d, a gear 110e, and a clutch 110f.

The rotating direction of the spindle motor 106 is changed 90° by the bevel gear 110c, and the rotating direction of the last gear shaft of the gear train 110b is changed 90° by the bevel gear 110d, with the lead screw 109 being rotated in the directions indicated in the drawing. The rotating motion of the quick-feed motor 114 is transmitted to the bevel gear 110d via the gear 110e and clutch 110f. Accordingly, in performing quick feed along the Z axis, the rotating motion of the quick-feed motor 114 is transmitted to the lead screw 109 by the clutch 110f, and the spindle motor 106 is disconnected from the lead screw 109 by the gear train 110b. When this is done, the spindle mechanism 107 is quick-fed along the Z axis owing to the rotation of the quick-feed motor 114. In performing cutting feed, the quick-feed motor and lead screw are disconnected by the clutch 110f, and the spindle motor 106 and lead screw 109 are connected at the prescribed gear ratio in the gear train 110b. This causes the spindle mechanism to be transported for cutting feed along the Z axis.

According to the description relating to Fig. 1, acceleration and deceleration are performed by changing the gear ratio. However, an arrangement is possible wherein, rather than changing the gear ratio, the frequency of the pulses produced by the pulse generator 101d is controlled by the first speed signal GCS1, second speed signal GCS2, third speed signal GCS3 and positioning end signal DEN. Changing the pulse frequency merely entails altering the numerical value applied to the pulse generator 101d, which is constituted by the pulse rate multiplier or DDA. The reason is that if $V_i$ is the numerical value applied to the pulse generator 101d, then the output pulse rate f thereof will be given by:

$$f = kV_i.$$

Fig. 5 shows an embodiment in which the pulse generator 101d is constituted by a DDA. A register 201 is set to the numerical value $V_i$. Each time a pulse P is generated at a given frequence F, an adder 202 adds the contents ($V_i$) of the register 201 and the value (initially zero) which has accumulated in an accumulator 203, and stores the sum in the accumulator 203. Accordingly, if the accumulator 203 is composed of n bits, the frequency of overflow pulses $P_c$ produced by the accumulator will be given by:

$$f = V_i F/2^n = kV_i.$$

Therefore, if the value of $V_i$ is altered by the first speed signal, second speed signal, third speed signal and positioning end signal DEN, then the frequency of the pulses $P_c$ will change and, hence, so will the rotating speed of the spindle motor 106. The end result will be a change in the rotating speed of the lead screw 109. Note that it is necessary to arrange it so that acceleration and deceleration are not performed when drilling is carried out.

According to the present invention, a spindle motor can be used also as a Z-axis feed motor, enabling the elimination of one feed motor and the servo circuit for that feed motor. This makes it possible to reduce the cost of the numerically controlled machine tool by a wide margin. Further, travel along the z axis can be accelerated and decelerated, and a movable element can be stopped at a commanded position. The present invention is extremely advantageous in that is can be applied to a low-cost NC drilling machine or the like.

## Claims

1.  A numerically controlled machine tool having a spindle motor (106) for rotating a spindle (107a) to provide a machining action on a workpiece, a feed shaft (109) for driving a movable element; means (101c,112) for monitoring the distance remaining to be travelled by the feed shaft (109), and feed velocity changeover means(101h,110,111) for changing the feed velocity of the feed shaft (109) on the basis of said distance; characterised in that said driven movable element provides a feed of the spindle(107a) relative to said workpiece and by the further provision of a mechanism (110) for mechanically connecting the motive force of the said spindle motor (106) to the feed shaft (109) in order to drive the feed shaft by the rotation of the spindle motor(106).

2.  A numerically controlled machine tool according to claim 1, characterised in that the feed velocity changeover means comprises a gear mechanism (110) capable of changing the gear ratio between the spindle motor (106) and the feed shaft (109).

3.  A numerically controlled machine tool according to claim 2, characterised in that the said gear ratio becomes larger as the said remaining travel distance becomes smaller, so as to decelerate the spindle motor.

4.  A numerically controlled machine tool according to any preceding claim, characterised by having a brake (113) for the feed shaft.

5.  A numerically controlled machine tool according to claim 4, characterised in that when the said distance becomes zero or close to zero, the spindle and feed shaft are disconnected and the brake (113) is applied.

6. A numerically controlled machine tool according to any preceding claim, further comprising means for issuing a move command to start the movement of the movable element.

7. A numerically controlled machine tool according to any preceding claim, characterised in that the movable element is a table.

8. A numerically controlled machine tool according to any of claims 1 to 6, characterised in that the movable element is a tool [107e).

9. A numerically controlled machine tool according to claim 8, characterised in that the tool (107e) is mounted on the said spindle (107a).

**Revendications**

1. Une machine-outil à commande numérique comprenant un moteur de broche (106) pour entraîner une broche (107a) en rotation, afin de créer une action d'usinage sur une pièce, un arbre d'avance (109) pour entraîner un élément mobile ; un moyen (101c, 112) pour surveiller la distance restant à parcourir par l'arbre d'avance (109), et un moyen de changement de la vitesse d'avance (101h, 110, 111) pour modifier la vitesse d'avance de l'arbre d'avance (109) en fonction de ladite distance ; caractérisée en ce que ledit élément mobile entraîné crée une avance de la broche (107a) par rapport à ladite pièce, et par la prévision supplémentaire d'un mécanisme (110) pour relier mécaniquement la force motrice dudit moteur de broche (106) à l'arbre d'avance (109) afin d'entraîner l'arbre d'avance par la rotation du moteur de broche (106).

2. Une machine-outil à commande numérique selon la revendication 1, caractérisée en ce que le moyen de changement de la vitesse d'avance comprend un mécanisme d'engrenage (110) capable de modifier le rapport d'engrenage entre le moteur de broche (106) et l'arbre d'avance (109).

3. Une machine-outil à commande numérique selon la revendication 2, caractérisée en ce que ledit rapport d'engrenage devient plus grand au fur et à mesure que la distance de trajet restant à parcourir diminue, afin de décélérer le moteur de broche.

4. Une machine-outil à commande numérique selon l'une quelconque des revendications précédentes, caractérisée en ce qu'un frein (113) est prévu pour l'arbre d'avance.

5. Une machine-outil à commande numérique selon la revendication 4, caractérisée en ce qu'au moment où ladite distance prend la valeur zéro ou une valeur proche de zéro, la broche et l'arbre d'avance sont déconnectés et le frein (113) est appliqué.

6. Une machine-outil à commande numérique selon l'une quelconque des revendications précédentes, comprenant en outre des moyens pour délivrer une commande de mouvement et faire démarrer le mouvement de l'élément mobile.

7. Une machine-outil à commande numérique selon l'une des revendications précédentes, caractérisée en ce que l'élément mobile est une table.

8. Une machine-outil à commande numérique selon l'une quelconque des revendications 1 à 6, caractérisée en ce que l'élément mobile est un outil (107e).

9. Une machine-outil à commande numérique selon la revendication 8, caractérisée en ce que l'outil (107e) est monté sur ladite broche (107a).

**Ansprüche**

1. Numerisch gesteuerte Werkzeugmaschine, mit einem Spindelmotor (106) zum Drehen einer Spindel (107a) zum Erzeugen eines Bearbeitungsvorgangs an einem Werkstück, einer Schaltwelle (109) zum Antrieb eines beweglichen Elements, einer Einrichtung (101c, 112) zum Überwachen des durch die Schaltwelle (109) zu bewegenden verbleibenden Abstandes, und einer Vorschubgeschwindigkeitumschalteinrichtung (101h, 110, 111) zum Umschalten der Transportgeschwindigkeit der Schaltwelle (109) auf der Basis des Abstandes, **dadurch gekennzeichnet,** daß das angetriebene bewegliche Element einen Transport der Spindel (107a) relativ zu dem Werkstück bewirkt und daß ein Mechanismus (110) zum. mechanischen Anlegen der Antriebskraft des Spindelmotors (106) an die Schaltwelle (109) vorgesehen ist, um die Schaltwelle durch die Drehung des Spindelmotors (106) anzutreiben.

2. Numerisch gesteuerte Werkzeugmaschine nach Anspruch 1, **dadurch gekennzeichnet,** daß die Transportgeschwindigkeitsumschalteinrichtung einen Getriebemechanismus (110) aufweist, der das Übersetzungsverhältnis zwischen dem Spindelmotor (106) und der Schaltwelle (109) umschalten kann.

3. Numerisch gesteuerte Werkzeugmaschine nach Anspruch 2, **dadurch gekennzeichnet**, daß das Übersetzungsverhältnis größer wird, wenn der verbleibende Bewegungsabstand kleiner wird, um den Spindelmotor zu verzögern.

4. Numerisch gesteuerte Werkzeugmaschine nach einem der vorhergehenden Ansprüche, **gekennzeichnet durch** eine Bremse (113) für die Schaltwelle.

5. Numerisch gesteuerte Werkzeugmaschine nach Anspruch 4, **dadurch gekennzeichnet**, daß die Spindel und die Schaltwelle voneinander getrennt und die Bremse (113) angelegt sind, wenn der Abstand Null oder nahe Null wird.

6. Numerisch gesteuerte Werkzeugmaschine nach einem der vorhergehenden Ansprüche, mit einer Einrichtung zum Ausgeben eines Bewegungsbefehls zum Starten der Bewegung des beweglichen Elements.

7. Numerisch gesteuerte Werkzeugmaschine nach einem der vorhergehenden Ansprüche, **dadurch gekennzeichnet**, daß das bewegliche Element ein Tisch ist.

8. Numerisch gesteuerte Werkzeugmaschine nach einem der Ansprüche 1 bis 6, **dadurch gekennzeichnet**, daß das bewegliche Element ein Werkzeug (107e) ist.

9. Numerisch gesteuerte Werkzeugmaschine nach Anspruch 8, **dadurch gekennzeichnet**, daß das Werkzeug (107e) an der Spindel (107a) befestigt ist.

# FIG.I

EP 0 120 973 B1

FIG. 2

FIG.3

FIG.4

FIG.5